(19) Europäisches Patentamt
European Patent Office
Office européen des brevets

(11) **EP 4 134 547 B1**

(12) **EUROPEAN PATENT SPECIFICATION**

(45) Date of publication and mention
of the grant of the patent:
**11.12.2024 Bulletin 2024/50**

(51) International Patent Classification (IPC):
**F04B 15/04** (2006.01) **F04B 43/06** (2006.01)
**F04B 43/067** (2006.01)

(21) Application number: **22188683.1**

(22) Date of filing: **04.08.2022**

(52) Cooperative Patent Classification (CPC):
**F04B 43/067; F04B 15/04; F04B 43/06;**
Y02A 30/27; Y02B 30/62

(54) **PUMPING SYSTEM FOR ABSORPTION HEAT PUMP CIRCUITS**

PUMPENSYSTEM FÜR ABSORPTIONSWÄRMEPUMPENKREISLÄUFE

SYSTÈME DE POMPAGE POUR LES CIRCUITS DE POMPES À CHALEUR À ABSORPTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2021 IT 202100021521**

(43) Date of publication of application:
**15.02.2023 Bulletin 2023/07**

(73) Proprietor: **ARISTON S.P.A.**
**60044 Fabriano (AN) (IT)**

(72) Inventors:
• **BREVI, Pietro**
**24060 Bagnatica (IT)**
• **CABRI, Gianmarco**
**43044 Collecchio (IT)**
• **GALLI, Piero Agostino**
**20021 Baranzate (IT)**
• **VITAIOLI, Giorgio**
**60021 Camerano (IT)**

(74) Representative: **Savi, Massimiliano et al**
**Notarbartolo & Gervasi S.p.A.**
**Viale Achille Papa, 30**
**20149 Milano (IT)**

(56) References cited:
**EP-A1- 0 509 185     US-A- 4 483 154
US-A- 4 975 026     US-A- 5 624 246
US-A- 6 099 269     US-B1- 6 705 111**

**Description**

FIELD OF THE INVENTION

The present invention relates to the technical field of absorption heat pumps. In further detail, the present invention relates to the technical field of pumps used for transferring mixtures containing refrigerants, in general water-ammonia or lithium bromide-water, between absorber and generator in absorption heat pump plants.

BACKGROUND ART

Absorption heat pumps are based on a reciprocating cycle in which the refrigerant, in general ammonia ($NH_3$) or water in lithium bromide (LiBr) systems, passes from the high pressure environment (condenser) to the low pressure environment (evaporator) through an expansion or throttling stage to then return, after an absorption process, to the high pressure stage by means of a pump, rather than by means of a compressor, as in the vapor compression refrigeration cycles. In this type of plants, indeed, the output vapor from the evaporator is absorbed in a liquid solution, pumped, brought to the vapor phase, and then separated from the solution before starting a new cycle.

Condenser and evaporator are traditional components consisting of pipes placed in contact with the service fluids (they can be water or air in the ammonia absorption heat pump) in which the refrigerant flows, yielding heat to the condenser (on the high temperature side) and removing it from the evaporator (on the low temperature side).

The absorption occurs in an absorber and is promoted by the heat removal. The lower the temperature reached, the smaller the amount of solution required to absorb the cooling vapor.

The separation of the liquid solution occurs in a generator by introducing heat. Since the released vapors do not exclusively consist of refrigerant vapors, a rectifier is generally present between the generator and the condenser to ensure a certain purity of the refrigerant.

The transformations the refrigerant is subjected to form the cycle of the absorption heat pump. The energy required for operation is supplied by the generator, in particular by a burner, conventionally a gas burner, which heats the refrigerant-enriched solution by means of a flame tube. A small amount of electricity is then required to drive the pump.

The presence of refrigerants such as ammonia requires the heat pump circuit to be made of steel since the materials containing metals such as aluminum, copper or zinc cannot be used due to the corrosion to which they would be subjected. Therefore, since the circuit containing the refrigerant is to be sealed from the environment, the construction thereof requires weldings made with different technology and various and more costly apparatuses than the more common brazing joints used in vapor compression machines utilizing fluorinated gases.

As for the pump, there is a need in these absorption systems to pump an ammonia/water or water/lithium bromide solution from a low pressure of about 0-4 bar at the outlet from the absorber to a high pressure in the order of 20-25 bar at the inlet to the generator. The system flow rate depends on the power of the heat pump, which conventionally is in the order of 5 liters/hour per kW of thermal power.

Therefore, the pumps used in these systems must be capable of operating with toxic fluids with high pressure gradient and relatively low flow rate. Moreover, they must be capable of operating in the complete absence of lubricant (even small traces of oil prevent the absorption phenomenon) and for a time period which is to be at least equal to that of the expected duration of the product as a whole due to the inability/impossibility to carry out maintenance.

This imposes particular construction architectures/layouts mostly referred to configurations adopting membrane pumps driven by hydraulic pumps.

A membrane pump consists of two chambers separated by a membrane. By creating a pressure/vacuum in one of the two chambers, the membrane is deformed, thus causing a corresponding pressure/vacuum in the other chamber. By connecting an intake duct and a delivery duct to one of the two chambers by means of automatic valves which open in opposite direction when a given pressure is reached, a liquid may be drawn from the low pressure intake duct to send it into the high pressure delivery duct, thus utilizing the vacuum and the subsequent pressure caused by the motion of the membrane induced by depressurizing/pressurizing the oil in the other chamber.

Thereby, the mixture containing the refrigerant is kept separate from the environment and does not risk of being contaminated by lubricants required to operate the traditional pumps provided with moving mechanical members.

However, this solution has some drawbacks. The "membrane pump" and the "hydraulic pump" are two distinct components connected by high pressure ducts to alternatively transfer pressurized oil between the two pumps. This causes complexities and high costs. Moreover, at present the hydraulic pump is driven by an AC motor including a belt gear motor for moving the membrane at a speed such as not to cause cavitation in the solution containing the refrigerant and prevent stresses associated with the stepped opening of the delivery valves. The gear motor belt is a critical component subject to wear which requires to be replaced about every 10,000 operating hours. Other types of gear motors (e.g., helical gear motor) are not capable of withstanding the strong pulse loads provided by the application and for the duration required for an HVAC application.

Patent document US5624246 relates to an example of hydraulic pump for use in an ammonia absorption heating and cooling system. Patent document US6705111 relates to an ammonia-water absorption system that uses plunger driven spring return diaphragm to pump absorption solution.

It is the object of the present invention to provide a compact pumping system capable of transferring mixtures containing refrigerants from the absorber to the generator of an absorption heat pump in a safe, reliable manner and with a small number of components.

BRIEF DESCRIPTION OF THE INVENTION

The present invention achieves the object with an absorption heat pump plant according to claim 1, comprising a support, in which support a first housing for a cylinder in which a piston slides and a second housing for a membrane are obtained, where the second housing is closed by a plate, the membrane dividing the second housing into a non-communicating first chamber and second chamber. The first chamber communicates with the head of the cylinder by means of the support so that the reciprocating motion of the piston causes a pressure/vacuum of a fluid present in the first chamber so that the membrane can be deformed, thus causing a corresponding pressure/vacuum in the second chamber, the second chamber communicating with an intake duct and a delivery duct of the refrigeration mixture, there being provided automatic valves for closing the delivery duct when a vacuum adapted to draw the refrigeration mixture is created inside the chamber, and for closing the intake duct when an overpressure adapted to send the refrigeration mixture into the pressurized delivery duct is created inside the chamber.

This allows obtaining a decrease in the number of components, overall dimensions, weight, and cost of the pumping system.

In an embodiment, there are two membranes arranged in corresponding housings operating in parallel under the action of a pair of pistons driven by a single motor or by two separate motors.

The piston(s) are driven by an electric motor with direct drive type technology. This allows eliminating the use of the gear motor, in particular of the belt which is a critical component thereof.

Moreover, the direct drive technology allows having a feedback on the drive by monitoring the course of the current absorbed over time. This is particularly advantageous because it allows obtaining useful information to define operating parameters within the pumping system (e.g., pressures and flow rates).

According to an aspect, the invention also relates to an absorption heat pump plant comprising a generator, a condenser, a first expansion valve, an evaporator, an absorber, a pumping system according to the invention, and a second expansion valve, connected so as to subject a refrigerant to thermodynamic absorption cycles.

The plant can advantageously comprise a control unit for setting the operating parameters of the plant itself, where said control unit is interfaced with the pumping system to detect the fluid-dynamic parameters of the pumping system and correspondingly act on the plant components.

The further features and improvements are the subject of the sub-claims.

BRIEF DESCRIPTION OF THE DRAWINGS

Further features and advantages of the invention will become apparent from the reading of the following detailed description, given by way of a non-limiting example, with the aid of the figures shown on the accompanying drawings, in which:

Figure 1 schematically shows the components of an absorption heat pump.
Figure 2 schematically shows the pressures and temperatures in an absorption cycle.
Figure 3 schematically shows the operating principle of a membrane pump.
Figure 4 shows a pumping system according to an embodiment of the invention.

The following description of exemplary embodiments relates to the accompanying drawings. The same reference numbers in the various drawings identify the same elements or similar elements. The following detailed description does not limit the invention. The scope of the invention is defined by the appended claims.

DETAILED DESCRIPTION OF THE INVENTION

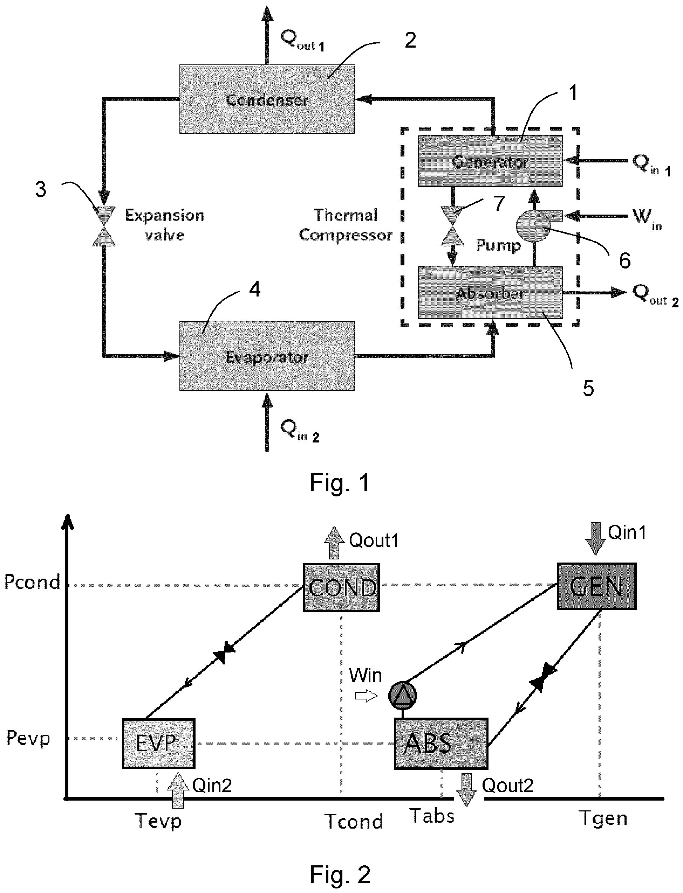

With reference to Figure 1, an absorption heat pump comprises a generator 1, a condenser 2, a first expansion valve 3, an evaporator 4, an absorber 5, a pumping system 6, and a second expansion valve 7.

The fluid evolving in the machine is a mixture containing a cooling substance, for example ammonia in water. Due to an amount of heat $Qin1$ which is supplied to generator 1, for example by means of a gas burner, the refrigerant, being the most volatile component of the mixture, separates from the solution. The vapor thus generated is sent to condenser 2, where it condenses by yielding heat Qout1 to an external source. Generator 1 and condenser 2 are both at a pressure Pcond which depends on the condensation temperature Tcond.

The refrigerant is then brought to a lower pressure Pevap by means of an expansion valve 3 and then sent to evaporator 4 in which it evaporates, removing heat Qin2 from an external source.

For the cycle to be repeated, the refrigerant needs to be brought back to solution. Such a task is assigned to absorber 5 in which the vapor of the low temperature refrigerant Tevp from evaporator 4 and the solution from generator 1 brought back to low pressure by an expansion valve 7 meet. Heat Qout2 also needs to be removed from absorber 5 to allow the condensation of the refrigerant and the dilution of the solution. The solution thus enriched is brought to high pressure Pcond by the pumping system 6 to be introduced into generator 1 again, where it starts its cycle again. The pumping system 6 absorbs electricity (indicated by Win in the drawing).

Figure 2 schematically shows the pressures and temperatures involved in an absorption cycle like that described above indicating the energy exchanged by means of arrows.

Overall, the energy balance is as follows:

$$Q_{out1} + Q_{out2} = Q_{in1} + Q_{in2} + W_{in} \rightarrow Q_{COND} + Q_{ASSORB} = Q_{GEN} + Q_{EVAP} + W_{POMPA}$$

While the heating and cooling efficiencies are given by:

$$\eta_{COOL} = \frac{Q_{in2}}{Q_{in1} + W_{in}} = \frac{Q_{EVAP}}{Q_{GEN} + W_{POMPA}}$$

$$\eta_{HEAT} = \frac{Q_{out1} + Q_{out2}}{Q_{in1} + W_{in}} = \frac{Q_{COND} + Q_{ASSORB}}{Q_{GEN} + W_{POMPA}} = \frac{Q_{GEN} + Q_{EVAP} + W_{POMPA}}{Q_{GEN} + W_{POMPA}} = 1 + \frac{Q_{EVAP}}{Q_{GEN} + W_{POMPA}}$$

Several variants are possible starting from the base diagram shown in Figure 1, mostly aiming to optimize the thermal exchanges and therefore increase the efficiencies, for example by using recuperative exchangers.

As for the pumping system 6, this conventionally comprises a membrane pump actuated by a hydraulic pump by means of a pressurized duct.

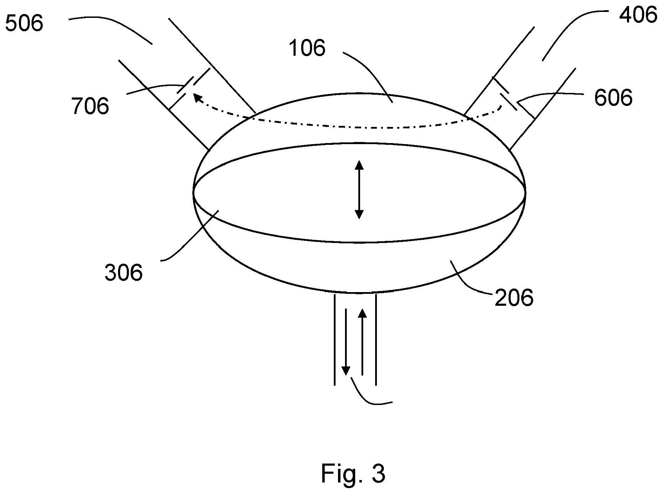

With reference to the exemplary diagram shown in Figure 3, a membrane pump 60 consists of two chambers 106, 206 separated by a membrane 306. By creating a pressure/vacuum in one of the two chambers 106, 206, the membrane 306 is deformed, thus causing a corresponding pressure/vacuum in the other chamber 206, 106. By connecting an intake duct 406 and a delivery duct 506 to ONE of the two chambers 106 by means of automatic valves 606, 706, which open in opposite direction when a given pressure is reached, a liquid can be drawn from the low pressure intake duct 406 to send it into the high pressure delivery duct 506, thus utilizing the vacuum and the subsequent pressure caused by the motion of the membrane, as shown by the arrows in the drawing. Oil is used to move the membrane, which oil is alternatively introduced/drawn into/from the other chamber 206 by a hydraulic piston pump (not shown). The actuation of the hydraulic pump occurs by means of an electric bel-reduction motor.

The invention relates to an improvement of the known pumping systems.

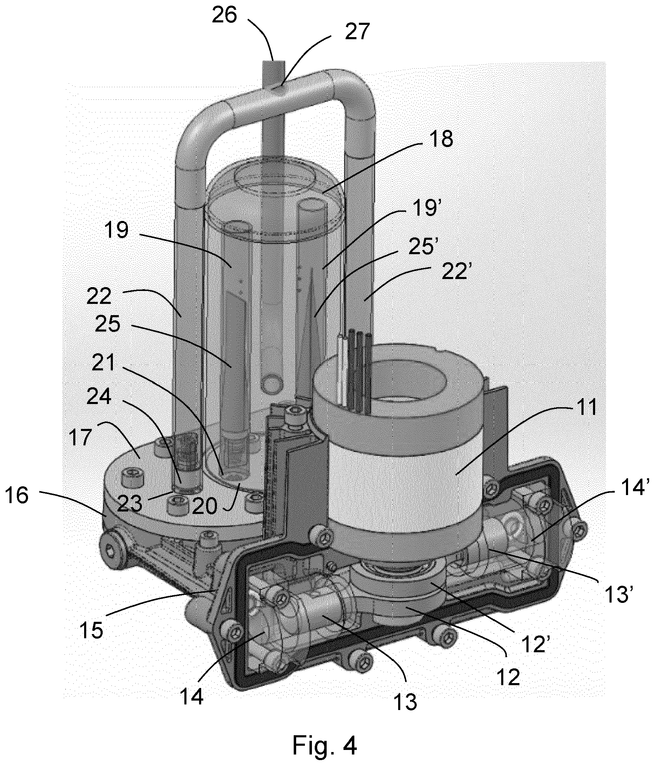

Figure 4 shows a pumping system 6 according to an embodiment of the present invention. The system comprises an electric motor 11 connected by a linkage 12, 12' to a pair of pistons 13, 13' which move coaxially in opposite directions inside corresponding cylinders 14, 14'. The cylinders are enclosed in a box-shaped body 15 extending transversely to the cylinders to form a support base for the whole pumping system, the cylinders 14, 14' forming the front part thereof. Two separate housings 16, 16' communicating with the corresponding cylinders 14, 14' by means of the box-shaped body 15 are obtained in the rear part of the box-shaped body 15. Thereby, the oil pushed or drawn by the head of each of the two cylinders 14, 14' is capable of reaching the corresponding housing 16, 16' without requiring the use of pressurized ducts. The section of the box-shaped body 15 can be advantageously reduced to reduce the amount of oil required to keep the fluid-dynamic connection between head of the cylinders 14, 14' and corresponding housings 16, 16'.

Each housing 16, 16', typically cylindrical in shape, is closed at the top by a flange 17, 17' by the interposition of a membrane (not shown in the drawing) so as to form a pair of chambers separated by the membrane itself. There can be only one closing flange which advantageously closes both housings.

The first chamber, adapted to receive the pressurized oil from the corresponding cylinder, is located at the bottom between box-shaped body and membrane, while the second chamber, adapted to draw and send under pressure the mixture containing the refrigerant, is located at the top of the first one, between membrane and closing flange.

The container 18 of the solution to be pumped is located in median position above the two flanges 17, 17' so as to allow the intake of the contents thereof by means of an intake duct 19, 19' arranged at an opening 20, 20' made on each closing flange 17, 17' to form an intake gap. There is a valve 21, 21' between duct and intake gap for automatically closing the fluid-dynamic intake circuit when the solution chamber is pressurized.

The delivery duct 22, 22' of the output pressurized solution is placed at another opening 23, 23' made on the closing flange 17, 17'. Also in this case, there is a valve 24, 24' between delivery duct 22, 22' and delivery gap 23, 23' for automatically closing the fluid-dynamic delivery circuit when the solution chamber is depressurized.

The two valves 21, 21' and 24, 24' operate in an opposite manner, i.e., when one opens, the other one closes, to ensure the pumping effect as described above with reference to Figure 3.

The circuit is completed with a pair of filters 25, 25' located in the intake ducts 19, 19' and a supplying duct 26 for the solution tank 18. The delivery ducts 22, 22' can be kept separate or be joined, as shown in the drawing. In this case, a T sleeve 27 collects the pressurized fluid output from each chamber.

The solution shown with dual cylinder and dual membrane is considered preferable because it allows reaching the pressure gradients required more easily with the low flow rates involved, thus simultaneously ensuring an absence of cavitation. It is obviously possible to provide the use of a pumping system comprising a single cylinder and a single membrane, as well as intermediate combinations, for example having a single cylinder in communication with two chambers each housing one membrane, or two cylinders controlled by two separate motors.

The motor(s) 11 advantageously are of the direct drive type, i.e., with load directly connected to the rotor. These motors are capable of delivering variable torques, even at a low number of revolutions, without requiring the use of gear trains or gear motors of any type by virtue of their characterizing electronic control.

A direct drive motor is a type of synchronous permanent magnet motor which directly actuates the load. When this type of motor is used, the use of a reducer is eliminated. Therefore, the number of movable components in the system is significantly reduced. This increases the efficiency and creates a silent and highly dynamic operation, as well as a very high duration of the system.

Examples of direct drive motors are torque motors, linear motors, and certain types of BLDC motors.

Direct drive motors are highly suitable for applications with significant torque fluctuations. This is because they just need a low torque to accelerate the motor with respect to gear motors, which have a lower torque/inertia ratio.

Moreover, they can also be provided as frameless motors. Frameless relates to a motor without a frame, housing, bearings, or feedback system. Accordingly, the plant suppliers are capable of integrating their motor in the application itself, eliminating the need for a further interfacing. This obviously decreases the cost of the integrated system.

A direct drive motor can be used in an absorption heat pump application due to the high torque at low angular speed, small dimensions, small weight, maximum power, presence of driving electronics providing an optimal speed control and useful information on rotor position and absorbed currents.

The direct drive motor can provide complete control of the electric absorption parameters precisely due to the presence of the electronic control. By connecting such an interface to a control unit, it is possible to read and process said parameters in order to determine the flow conditions of the operating pumping system.

Thereby, the same control unit or a plant control interfaced with the control unit or directly with the motor(s) of the pumping system can advantageously set the operating parameters of the plant based on the flow conditions of the pumping system.

## Claims

1. An absorption heat pump plant comprising a generator (1), a condenser (2), a first expansion valve (3), an evaporator (4), an absorber (5), a pumping system (6) and a second expansion valve (7), connected so as to subject a refrigerant mixture to thermodynamic absorption cycles wherein the pumping system (6) comprises a support (15), in which support a first housing is obtained for a first cylinder (14) in which a first piston (13), connected to an electric motor (11), slides, and a second housing (16) for a first membrane, wherein the second housing (16) is closed by a plate (17), the first membrane dividing the second housing into a non-communicating first chamber and second chamber, the first chamber communicating with the head of the first cylinder (14) by means of the support (15) so that the reciprocating motion of the piston (13) causes a pressure/vacuum of a fluid present in the first chamber so that the first membrane may be deformed, thus causing a corresponding pressure/vacuum in the second chamber, the second chamber communicating with a first intake duct (19) and a first delivery duct (22) of the refrigeration mixture, there being provided automatic valves (21, 24) for closing the first delivery duct (22) when a vacuum adapted to draw the refrigeration mixture is created inside the second chamber, and for closing the first intake duct (19) when an overpressure adapted to send the refrigeration mixture into the first pressurized delivery duct (22) is created inside the second chamber **characterized in that** the electric motor (11) is a direct drive motor which has an interface for controlling the electric absorption parameters, said interface being connectable to a control unit adapted to read and process said parameters in order to determine the flow conditions of the operating pumping system.

2. A plant according to claim 1, wherein a third housing for a second membrane is obtained in the support (15), wherein the third housing is closed by a separate plate (17') or by the same plate (17') which closes the second housing, the second membrane dividing the third housing into a non-communicating third chamber and fourth chamber, the third chamber also communicating with the head of the first cylinder (14) by means of the support (15) so that the reciprocating motion of the first piston (13) which slides in the first cylinder (14) causes a pressure/vacuum of the fluid present in the third chamber so that the second membrane may be deformed, thus causing a corresponding pressure/vacuum in the fourth chamber, the fourth chamber communicating with a second intake duct (19') and a second delivery duct (22') of the refrigeration mixture, there being provided automatic valves (21', 24') for closing the second delivery duct (22') when a vacuum adapted to draw the refrigeration mixture is created inside the fourth chamber, and for closing the second intake duct (19') when an overpressure adapted to send the refrigeration mixture into the second pressurized delivery duct (22') is created inside the fourth chamber.

3. A plant according to claim 2, wherein a fourth housing for a second cylinder (14') inside which a second piston (13'), connected to a direct drive motor (11), slides, is obtained in the support, the head of the second cylinder (14') communicating with the third chamber, which third chamber does not communicate with the first chamber so that it is the reciprocating motion of the second piston (13') to cause a pressure/vacuum of a fluid present in the third chamber, so that the second membrane may be deformed, thus causing a corresponding pressure/vacuum in the fourth chamber.

4. A plant according to claim 2 or 3, wherein the first and second delivery ducts (22, 22') communicate with a same outlet sleeve (27).

5. A plant according to one or more of the preceding claims, wherein there is present a container (18) of the solution to be pumped at the plate (17) so as to allow the drawing of the contents thereof by means of the intake ducts (19, 19') arranged at openings (20, 20') obtained in the closing plate (17) to form intake gaps.

6. A plant according to one or more of the preceding claims, wherein the piston or the pistons (13, 13') are connected to an electric motor (11) by means of a linkage (12, 12').

7. A plant according to one or more of the preceding claims, comprising a control unit for setting the operating parameters of the plant, wherein said control unit is interfaced with the control unit of the pumping system, or replaces said control unit, to detect the fluid-dynamic parameters of the pumping system and correspondingly act on the plant components.

**Patentansprüche**

1. Absorptionswärmepumpenanlage, umfassend einen Generator (1), einen Kondensator (2), ein erstes Expansionsventil (3), einen Verdampfer (4), einen Absorber (5), ein Pumpsystem (6) und ein zweites Expansionsventil (7), die so verbunden sind, dass sie ein Kältemittelgemisch thermodynamischen Absorptionszyklen unterziehen, wobei das Pumpsystem (6) einen Träger (15) umfasst, wobei in dem Träger ein erstes Gehäuse für einen ersten Zylinder (14), in dem ein mit einem Elektromotor (11) verbundener erster Kolben (13) gleitet, und ein zweites Gehäuse (16) für eine erste Membran ausgebildet ist, wobei das zweite Gehäuse (16) durch eine Platte (17) verschlossen ist, wobei die erste Membran das zweite Gehäuse in eine nicht in Verbindung stehende erste Kammer und eine zweite Kammer unterteilt, wobei die erste Kammer mit dem Kopf des ersten Zylinders (14) mittels des Trägers (15) in Verbindung steht, so dass die Hin- und Herbewegung des Kolbens (13) einen Druck/ein Vakuum eines in der ersten Kammer vorhandenen Fluids verursacht, so dass die erste Membran verformt werden kann, wodurch ein entsprechender Druck/ein entsprechendes Vakuum in der zweiten Kammer verursacht wird, wobei die zweite Kammer mit einem ersten Einlasskanal (19) und einem ersten Auslasskanal (22) des Kältemittelgemisches in Verbindung steht, wobei automatische Ventile (21, 24) zum Schließen des ersten Auslasskanals (22), wenn in der zweiten Kammer ein Vakuum erzeugt wird, das dazu geeignet ist, das Kältemittelgemisch anzusaugen, und zum Schließen des ersten Einlasskanals (19) vorgesehen sind, wenn in der zweiten Kammer ein Überdruck erzeugt wird, der dazu geeignet ist, das Kältemittelgemisch in den ersten unter Druck stehenden Auslasskanal (22) zu leiten, **dadurch gekennzeichnet, dass** der Elektromotor (11) ein Direktantriebsmotor ist, der eine Schnittstelle zum Steuern der elektrischen Absorptionsparameter aufweist, wobei die Schnittstelle mit einer Steuereinheit verbindbar ist, die dazu geeignet ist, die Parameter zu lesen und zu verarbeiten, um die Strömungsbedingungen des im Betrieb befindlichen Pumpsystems zu bestimmen.

**2.** Anlage nach Anspruch 1, wobei ein drittes Gehäuse für eine zweite Membran in dem Träger (15) ausgebildet ist, wobei das dritte Gehäuse durch eine getrennte Platte (17') oder durch dieselbe Platte (17'), die das zweite Gehäuse verschließt, verschlossen wird, wobei die zweite Membran das dritte Gehäuse in eine nicht in Verbindung stehende dritte Kammer und vierte Kammer unterteilt, wobei die dritte Kammer auch mit dem Kopf des ersten Zylinders (14) mittels des Trägers (15) in Verbindung steht, so dass die Hin-und Herbewegung des ersten Kolbens (13), der in dem ersten Zylinder (14) gleitet, einen Druck/ein Vakuum des in der dritten Kammer vorhandenen Fluids verursacht, so dass die zweite Membran verformt werden kann, wodurch ein entsprechender Druck/ein entsprechendes Vakuum in der vierten Kammer erzeugt wird, wobei die vierte Kammer mit einem zweiten Einlasskanal (19') und einem zweiten Auslasskanal (22') für das Kältemittelgemisch in Verbindung steht, wobei automatische Ventile (21', 24') zum Schließen des zweiten Auslasskanals (22'), wenn in der vierten Kammer ein Vakuum erzeugt wird, das dazu geeignet ist, das Kältemittelgemisch anzusaugen, und zum Schließen des zweiten Einlasskanals (19') vorgesehen sind, wenn in der vierten Kammer ein Überdruck erzeugt wird, der dazu geeignet ist, das Kältemittelgemisch in den zweiten unter Druck stehenden Auslasskanal (22') zu leiten.

**3.** Anlage nach Anspruch 2, wobei ein viertes Gehäuse für einen zweiten Zylinder (14'), in dessen Inneren ein zweiter Kolben (13'), der mit einem Direktantriebsmotor (11) verbunden ist, gleitet, in dem Träger ausgebildet ist, wobei der Kopf des zweiten Zylinders (14') mit der dritten Kammer in Verbindung steht, wobei die dritte Kammer nicht mit der ersten Kammer in Verbindung steht, so dass die Hin- und Herbewegung des zweiten Kolbens (13') einen Druck/ein Vakuum eines in der dritten Kammer vorhandenen Fluids verursacht, so dass die zweite Membran verformt werden kann, wodurch ein entsprechender Druck/ein entsprechendes Vakuum in der vierten Kammer verursacht wird.

**4.** Anlage nach Anspruch 2 oder 3, wobei der erste und zweite Auslasskanal (22, 22') mit demselben Ablassstutzen (27) in Verbindung stehen.

**5.** Anlage nach einem oder mehreren der vorhergehenden Ansprüche, wobei ein Behälter (18) für die zu pumpende Lösung an der Platte (17) vorhanden ist, um das Ansaugen des Inhalts mittels der Einlasskanäle (19, 19') zu ermöglichen, die an Öffnungen (20, 20') angeordnet sind, die in der Verschlussplatte (17) zur Bildung von Einlassspalten ausgebildet sind.

**6.** Anlage nach einem oder mehreren der vorhergehenden Ansprüche, wobei der Kolben oder die Kolben (13, 13') mittels eines Gestänges (12, 12') mit dem Elektromotor (11) verbunden sind.

**7.** Anlage nach einem oder mehreren der vorhergehenden Ansprüche, umfassend eine Steuereinheit zum Einstellen der Betriebsparameter der Anlage, wobei die Steuereinheit über eine Schnittstelle mit der Steuereinheit des Pumpsystems verbunden ist oder die Steuereinheit ersetzt, um die fluiddynamischen Parameter des Pumpsystems zu erfassen und entsprechend auf die Anlagenkomponenten einzuwirken.

**Revendications**

**1.** Installation de pompe à chaleur à absorption comprenant un générateur (1), un condenseur (2), un premier détendeur (3), un évaporateur (4), un absorbeur (5), un système de pompage (6) et un deuxième détendeur (7), reliés de manière à soumettre un mélange réfrigérant à des cycles d'absorption thermodynamiques, dans laquelle le système de pompage (6) comprend un support (15), dans lequel un premier carter est obtenu pour un premier cylindre (14) dans lequel un premier piston (13), relié à un moteur électrique (11), coulisse, et un deuxième carter (16) pour une première membrane, dans laquelle le deuxième carter (16) est fermé par une plaque (17), la première membrane divisant le deuxième carter en une première chambre et une deuxième chambre non communicantes, la première chambre communiquant avec la tête du premier cylindre (14) au moyen du support (15) de sorte que le mouvement alternatif du piston (13) provoque une pression/dépression d'un fluide présent dans la première chambre de sorte que la première membrane peut être déformée, provoquant ainsi une pression/dépression correspondante dans la deuxième chambre, la deuxième chambre communiquant avec un premier conduit d'admission (19) et un premier conduit de distribution (22) du mélange réfrigérant, des vannes automatiques (21, 24) étant prévues pour fermer le premier conduit de distribution (22) lorsqu'une dépression adaptée pour aspirer le mélange réfrigérant est créée à l'intérieur de la deuxième chambre, et pour fermer le premier conduit d'admission (19) lorsqu'une surpression adaptée pour envoyer le mélange réfrigérant dans le premier conduit de distribution sous pression (22) est créée à l'intérieur de la deuxième chambre, **caractérisée en ce que** le moteur électrique (11) est un moteur à entraînement direct qui possède une interface pour contrôler les paramètres d'absorption électrique, ladite interface étant connectable à une unité de commande adaptée pour lire et traiter lesdits paramètres afin de déterminer les conditions d'écoulement du système de pompage en fonctionnement.

2.  Installation selon la revendication 1, dans laquelle un troisième carter pour une deuxième membrane est obtenu dans le support (15), dans laquelle le troisième carter est fermé par une plaque séparée (17') ou par la même plaque (17') qui ferme le deuxième carter, la deuxième membrane divisant le troisième carter en une troisième chambre et une quatrième chambre non communicantes, la troisième chambre communiquant également avec la tête du premier cylindre (14) au moyen du support (15) de sorte que le mouvement alternatif du premier piston (13) qui coulisse dans le premier cylindre (14) provoque une pression/dépression du fluide présent dans la troisième chambre de sorte que la deuxième membrane peut être déformée, provoquant ainsi une pression/dépression correspondante dans la quatrième chambre, la quatrième chambre communiquant avec un deuxième conduit d'admission (19') et un deuxième conduit de distribution (22') du mélange réfrigérant, des vannes automatiques (21', 24') étant prévues pour fermer le deuxième conduit de distribution (22') lorsqu'une dépression adaptée pour aspirer le mélange réfrigérant est créée à l'intérieur de la quatrième chambre, et pour fermer le deuxième conduit d'admission (19') lorsqu'une surpression adaptée pour envoyer le mélange de réfrigération dans le deuxième conduit de distribution sous pression (22') est créée à l'intérieur de la quatrième chambre.

3.  Installation selon la revendication 2, dans laquelle un quatrième carter pour un deuxième cylindre (14') à l'intérieur duquel coulisse un deuxième piston (13'), relié à un moteur à entraînement direct (11), est obtenu dans le support, la tête du deuxième cylindre (14') communiquant avec la troisième chambre, laquelle troisième chambre ne communique pas avec la première chambre de sorte que c'est le mouvement alternatif du deuxième piston (13') qui provoque une pression/dépression d'un fluide présent dans la troisième chambre, de sorte que la deuxième membrane peut être déformée, provoquant ainsi une pression/dépression correspondante dans la quatrième chambre.

4.  Installation selon la revendication 2 ou 3, dans laquelle les premier et deuxième conduits de distribution (22, 22') communiquent avec un même manchon de sortie (27).

5.  Installation selon une ou plusieurs des revendications précédentes, dans laquelle un récipient (18) de la solution à pomper est présent au niveau de la plaque (17) de manière à permettre l'aspiration de son contenu au moyen des conduits d'admission (19, 19') disposés au niveau des ouvertures (20, 20') obtenues dans la plaque de fermeture (17) pour former des espaces d'admission.

6.  Installation selon une ou plusieurs des revendications précédentes, dans laquelle le piston ou les pistons (13, 13') sont reliés à un moteur électrique (11) au moyen d'un couplage (12, 12').

7.  Installation selon une ou plusieurs des revendications précédentes, comprenant une unité de commande pour régler les paramètres de fonctionnement de l'installation, dans laquelle ladite unité de commande est interfacée avec l'unité de commande du système de pompage, ou remplace ladite unité de commande, pour détecter les paramètres de dynamique des fluides du système de pompage et agir en conséquence sur les composants de l'installation.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5624246 A
- US 6705111 B